# EUROPEAN PATENT SPECIFICATION

(11) **EP 1 297 949 B1**
(45) Date of publication and mention of the grant of the patent: **14.11.2007**
(21) Application number: 02021825.1
(22) Date of filing: 27.09.2002
(51) Int. Cl.: B32B 27/36, C08J 5/18

(54) **A biaxially stretched biodegradable polyester film and a laminated film**
Biologisch abbbaubare biaxial gereckte Polyesterfolie und Verbundfolie
Film polyester biodégradable étiré biaxialement et feuille lamineé

(30) Priority: 27.09.2001 JP 2001298418
(43) Date of publication of application: 02.04.2003
(73) Proprietor: Tohcello Co., Ltd., Tokyo 104-0031 (JP)
(72) Inventor: Narita, Junichi, Sashima-gun, Ibaraki-ken 306-0213 (JP); Sawai, Tohru, Sashima-gun, Ibaraki-ken 306-0213 (JP); Takeishi, Ichiro, Sashima-gun, Ibaraki-ken 306-0213 (JP)
(74) Representative: HOFFMANN EITLE

(56) References cited:
- EP-A- 1 038 906
- EP-A- 1 193 294
- WO-A-01/10928
- US-A- 5 252 646
- PATENT ABSTRACTS OF JAPAN vol. 2000, no. 24, 11 May 2001 (2001-05-11) & JP 2001 205766 A (TOHCELLO CO LTD), 31 July 2001 (2001-07-31)
- PATENT ABSTRACTS OF JAPAN vol. 1998, no. 14, 31 December 1998 (1998-12-31) & JP 10 251612 A (TOPPAN PRINTING CO LTD), 22 September 1998 (1998-09-22)

## Description

### [Technical field]

This invention relates to a biaxially stretched film of a biodegradable polyester excellent in moisture-preventing property and transparency as well as a laminated film thereof.

### [Prior art]

A biodegradable film undergoes hydrolysis or biolysis in soil or water to permit gradual promotion of degradation or decomposition and finally is converted into a decomposed substance by the action of microorganisms. Known as such film are films molded from aliphatic polyester resins such as polylactic acid and the like, aromatic polyesters, polyvinyl alcohol, cellulose acetate, and starch. Above all, a biaxially stretched film using polylactic acid is excellent in transparency and rigidity, as is similar to a biaxially stretched polypropylene film used in a large amount as a film for packaging, and is employed partially as a film for the purpose of packaging. As compared with the biaxially stretched polypropylene film, however, the biaxially stretched film using polylactic acid is inferior in moisture-preventing property (water vapor barrier) so that the range for utilization as packaging film is restricted.

On the other hand, a method for incorporating polypropylene with a hydrogenated resin having a softening point of 120~180°C was proposed as a method for improving the moisture-preventing property (decrease in the rate of moisture permeability) of the biaxially stretched polypropylene film (JP-T-1-500102).

However, addition of such hydrogenated resin to a biodegradable polyester such as polylactic acid fails to afford a film having good appearance and to improve moisture-preventing property.

### [Problems to be solved by the Invention]

EP 1 193 294 A2, prior art according to Article 54(3) EPC, discloses an aliphatic polyester composition which is heat sealable. The composition comprises 9-90% by weight of a polylactic acid component (A), 90-9% by weight of an aliphatic polyester (B) and 1-20% by weight of a tackifier (C). This document does not disclose any biaxially stretched biodegradable polyester films made from its compositions.

JP 2001 205 766 A discloses an aromatic polyester resin laminated film which comprises a polyvinyl alcohol resin coating layer provided on at least one surface of an aromatic polyester resin oriented film.

WO 01·10928 A discloses an oriented aromatic polyester film comprising an aromatic polyester copolymer. The polyester copolymer has repeating units comprising an acid component and a glycol component. The acid component consists of 50-90% terephthalic acid, 0.2-6% sulphonic acid metal salt and 4-49.8% aliphatic dicarboxylic acid. The glycol component consists of 50-99.9% ethylene glycol and 0.1-50% diethylene glycol. The oriented film has at least an impulse seal strength or a highfrequency seal strength of at least 3 N/15mm.

EP 1 038 906 A2 relates to a film which comprises an aliphatic polyester as its main component. This aliphatic polyester has a primary repeating unit of a certain molecular formula, a viscosity of 0.50-2.50 dl/g and has a thermal shrinkage in the longitudinal direction at 120°C of not more than 5.0%. The polyester film is useful as a packaging film and as an adhesive tape and is biodegradable.

US 5 171 308 relates to polyesters and fibres and films produced therefrom. The polyesters are based upon polyethylene terephthalate which is copolymerised with a nonaromatic diacid such as adipic acid and glutaric acid.

US A 5 252 646 relates to hot melt adhesive compositions. These compositions are prepared from 20-98% by weight of a polylactide homo or copolymer comprising at least 20% of the lactide component. Furthermore, the adhesive compositions comprise 20-80% by weight of a polar tackifier having a ring and ball softening point which is greater than 60°C. Optionally, the compositions may comprise 0-50% by weight of a plasticizer, 0-30% by weight of a wax diluent, 0-3% by weight of a stabiliser arid 0-20% of a polymer. Preferably, a biodegradable copolymer is used as the base polymer.

### [Problems to be solved by the Invention]

It is an object of the present invention to develop a biaxially stretched film excellent in moisture-preventing property without damaging transparency, mechanical strength, etc. inherent to a film of biodegradable polyesters including aliphatic polyester resins, such as polylactic acid, and aromatic polyester resins.

### [Means for solving the Problems]

The present invention provides a biaxially stretched biodegradable polyester film excellent in barrier performance, especially moisture-preventing properties (water vapor barrier) obtainable from a polyester composition containing 80~99% by weight of a biodegradable polyester (A) and 1~20% by weight of a tackifier having a softening point within the range of 85~110°C.

The present invention preferably provides a biaxially stretched biodegradable polyester film obtainable from a polyester composition comprising a biodegradable polyester (A) selected from polylactic acid and an aromatic polyester, especially an aromatic polyester containing an aromatic dicarboxylic acid having a sulfonic acid metal base as a nuclear substituent and a tackifier (B) selected from an alicyclic hydrocarbon resin and a rosin derivative.

The present invention further provides a biaxially stretched biodegradable laminated polyester film comprising layer of a composition of an inorganic laminar compound (C) and a gas barrier polymer (D) preferably polyvinyl alcohol has been laminated on at least one side of the biaxially stretched biodegradable polymer film.

### [Detailed Description of the Invention]

### Biodegradable polyester (A):

The biodegradable polyester (A) constituting the polyester composition concerned with the present invention includes a variety of the known biodegradable polyesters. More particularly, the biodegradable polyester includes polylactic acid, or a biodegradable aliphatic polyester obtained by polydehydrocondensation or such polydehydrocondensation followed by a glycol splitting-off reaction of one or more of dibasic carboxylic acids having usually 4~12 carbon atoms and one or more of a glycols having usually 2~10 carbon atoms, the dibasic carboxylic acids being selected from succinic acid, glutaric acid, adipic acid, pimelic acid, suberic acid, azelaic acid, sebacic acid, undecane-diacid, dodecane-diacid, cyclopentanedicarboxylic acid, cyclohexanedicarboxylic acid, etc., the glycol being selected from ethylene glycol, triethylene glycol, 1,4-butanediol, pentamethylene glycol, 1,8-octylene glycol, nanoethylene glycol, decamethylene glycol, etc. Alternatively, the biodegradable polyester (A) includes a biodegradable aromatic polyester derived from an aromatic dicarboxylic acid, an aliphatic glycol and an aromatic dicarboxylic acid having a sulfonic metal base as a nuclear substituent. Among these polyesters, polylactic acid and the aromatic polyester having a melting point above 160°C, in particular, the aromatic polyester derived from the aromatic carboxylic acid having the sulfonic metal base as nuclear substituent are preferable since these polyesters are excellent in film characteristics such as moisture-preventing property, oxygen barrier property, transparency, strength, and flexibility.

### Polylactic acid:

Polylactic acid used in the present invention is (a) a homopolymer of lactic acid including poly(L-lactic acid) wherein the structural unit of lactic acid is L-lactic acid, poly(D-lactic acid) wherein the structural unit of lactic acid is D-lactic acid, and poly(DL-lactic acid) wherein the structural unit of lactic acid is a racemic mixture of L-lactic acid and D-lactic acid, (b) a copolymer of lactic acid wherein lactic acid is a predominant component and a copolymerizable monomer component other than lactic acid is in a smaller proportion, for example, a copolymer of lactic acid with less than 50% by weight, preferably not more than 30% by weight, and more preferably not more than 10% by weight of glycolic acid, or (c) a polymer of these mixtures containing a predominant proportion of lactic acid. Illustrative of the monomer copolymerizable with lactic acid are, for example, a 3-hdroxybutyrate, caprolactone and glycolic acid. Among these, a homopolymer of lactic acid alone is preferably employed because of its excellent transparency.

Any of the polymerization method can be employed as a method for polymerization of such polyalactic acid, such as polycondensation or ring-opening polymerization. In the polycondensation method, for example, L-lactic acid, D-lactic acid or a mixture of these is subjected directly to polydehydrocondensation reaction whereby polyalactic acid having a desired composition can be obtained.

In the ring-opening polymerization method, a lactide which is a cyclic dimer of lactic acid is used by the aid of a catalyst, if necessary, in the presence of a polymerization modifier to obtain polylactic acid. As the lactide includes L-lactide which is a dimer of L-lactic acid, D-lactide which is a dimer of D-lactic acid and DL-lactide consisting of L-lactic acid and D-lactic acid, these isomers are optionally mixed and polymerized to obtain polylactic acid having a desired composition and crystallinity.

A small amount of a chain-extending agent such as a diisocyanate compound, an epoxy compound or an acid anhydride can be used for the purpose of increasing molecular weight of the polylactic acid. A weight average molecular weight of the polylactic acid is generally within the range of 60,000-1,000,000. In case the molecular weight is smaller than this range, practical physical properties will scarcely be realized according to the intended use. On the other hand, if the molecular weight is greater than this range, the melt viscosity may become too high to deteriorate molding processability.

### Aromatic polyester:

The aromatic polyester concerned with the present invention is biodegradable and is preferably a polyester containing as a copolymerizable component an aromatic dicarboxylic acid having a sulfonic acid metal base as nuclear substituent. More precisely, the polyester is desirably a polyester obtained by mixing an aromatic dicarboxylic acid, an aliphatic glycol, with an aromatic dicarboxylic acid having a sulfonic metal base as nuclear substituent, if necessary, together with an aliphatic dicarboxylic acid or an aliphatic hydroxycarboxylic acid, subjecting these components to polycondensation reaction. A preferable composition of the aromatic polyester is 30-49.9 mol % of a unit based on the aromatic dicarboxylic acid component, 35-50 mol % of a unit based on the aliphatic glycol component, 0.1-5 mol % of a unit based on the aromatic dicarboxylic acid component having the sulfonic metal base as nuclear substituent, and 0-30 mol % of a unit based on the aliphatic dicarboxylic acid or the aliphatic hydroxycarboxylic acid component, with the proviso that a total of the all components should be 100 mol %. In order to impart flexibility and biodegradable property to the resultant film or in order to enhance these properties of the film, the aromatic polyester may be a multi-component polyester to which an aliphatic dicarboxylic acid or an aliphatic hydroxycarboxylic acid is further added as a copolymerizable component. Such aromatic polyesters are disclosed in detail in JP-T-5-507109, JP-T-6-505040, JP-T-6-5055513, etc.

The aromatic polyester used in the present invention preferably has a weight average molecular weight within the range of 10,000-500,000. The aromatic polyester preferably has a melt flow rate of 0.1-100 (g/10 min.) measured at 220°C under a lead of 2160 g in accordance with ASTM D-1238. In case the molecular weight and the melt flow rate of the polyester are within the range above described, the polyester will exhibit a melt viscosity suitable for extrusion molding and afford a mechanical strength sufficient enough for a biaxially stretched film.

### Tackifier (B):

More particularly, the tackifier (B) concerned with the present invention has a softening point of 85-110°C and is a coumarone-indene resin; a phenol resin such as p-*tert*-butylphenol-acetylene resin, a phenol-formaldehyde resin, a terpene-phenol resin, and xylene-formaldehyde resin, a terpene resin such as a β-pinene resin, α-pinene resin, a dipentene base resin, a styrene-modified terpene resin, and synthetic polyterpene resin; a terpene resin having no polar groups; a petroleum hydrocarbon resin such as an aromatic hydrocarbon resin, an aliphatic hydrocarbon resin, an alicyclic hydrocarbon resin, an aliphatic-alicyclic petroleum resin, an aliphatic-aromatic petroleum resin, and a hydrogenated hydrocarbon resin; and a rosin derivative such as pentaerythritol ester of rosin, glycerol ester of rosin, a hydrogenated rosin, pentaerythritol ester of a hydrogenated rosin, methyl ester of a hydrogenated rosin, triethyleneglycol ester of a hydrogenated rosin, a metal salt of a rosin ester, and a speciality rosin ester having an acid number of 10 or less.

A tackifier having a softening point lower than 85°C cannot be added in an amount sufficient to enhance moisture-preventing property since such tackifier tends to reduce the viscosity extremely at a normal molding treatment temperature of 220°C to deteriorate the film-forming properties. By the term "deterioration of the film-forming properties" is meant herein that the biodegradable polyester composition containing the tackifier, which has an extremely reduced viscosity, cannot be extruded uniformly from a die so that it flows down from the die as if it were dripped down like water, thus tending to cause a problem of deposition of the polyester composition on a chilled roll. On the other hand, the use of a tackifier having a softening point exceeding 110°C fails to afford a biaxially stretched film having a good appearance and is not effective to improve moisture-preventing property.

Among these tackifiers, the alicyclic hydrocarbon resin, the hydrogenated hydrocarbon resin, the metal salt of a rosin ester, and the speciality rosin ester having an acid number of 10 or less are preferable. In particular, the speciality rosin ester having an acid number of 10 or less and a softening point of 85-105°C and the hydrogenated, preferably at least 85%, especially at least 95% hydrogenated hydrocarbon resin are preferable since odor of the resultant film is extremely weak and the color tone thereof is excellent.

### Polyester composition:

The polyester composition concerned with the present invention is composed of 80-99% by weight, preferably 85-98% by weight of the biodegradable polymer (A) and 20-1% by weight, preferably 15-2% by weight of the tackifier (B). A biaxially stretched film excellent not only in appearance, transparency, flexibility and impact strength but also in moisture-preventing property is obtained by defining the proportion of these components within the ranges above described.

If the proportion of the tackifier (B) is less than 1% by weight, the resultant biaxially stretched film will not be improved in moisture-preventing property. On the other hand, the proportion exceeds 20% by weight, the resultant biaxially stretched film will become significant sticky and will tends to deteriorate transparency, impact strength, flexibility, etc. Moreover, the melt viscosity of the composition is decreased so that the molding processability of the polyester composition tends to deteriorate.

The polyester composition concerned with the present invention is made up by mixing the biodegradable polyester (A) with the tackifier (B) in the above proportion by the aid of Henshell mixer, a V-blender, a ribbon blender, tumbler mixer or the like or by melt-kneading the mixture thus mixed up by way of a monoaxial extruder, a multiaxial extruder or Banbury mixer, etc.

In addition to the polyester composition concerned with the present invention, the biodegradable polyester (A) and the tackifier (B) may be incorporated, individually separately or at the time of preparing the polyester composition, with additives usually employed such as an antioxidant, a weathering stabilizer, an antistatic agent, an anti-clouding agent, an anti-blocking agent, etc. in an amount not damaging the object of the present invention.

### Inorganic laminar compound (C):

The inorganic laminar compound (C) in the present invention means an inorganic compound forming a platelike granule or particle having a multilayer structure wherein one or more very thin unit crystal layers are laminated. Clay minerals are preferably used as the inorganic laminar compound. By the term "clay minerals" is meant herein clay compounds including compounds wherein very thin unit crystal layers are capable of coordinating or absorbing water so that water molecules are coordinated to increase the volume of the compound more than before soaking with water. In general, the compound has a layer wherein Si⁴⁺ is coordinated with O²⁻ to form a tetrahedral structure and a layer wherein Al³⁺, Mg²⁺, Fe²⁺, Fe³⁺, Li⁺, etc. are coordinated with O²⁻ and OH⁻ to form a octahedral structure, these layers being laminated in a ratio of 1:1 or 2:1to form a laminar structure. This compound may be natural or synthesized. Typical one includes montmorillonite, beidellite, saponite, hectorite, kaolinite, halloysite, vermiculite, deckite, nacrite, antigorite, pyrophillite, margarite, talc, tetrasyllilic mica, muscovite, phlogopite, chlorite, and the like minerals. Above all, montmorillonite, beidellite, hectorite and saponite called smectites are preferably used. In addition, synthetic products containing a small amount of impurities are also preferable, and sodium type tetrasyllilic mica and sodium hectorite produced according to the melting method, which permit growing of the crystal structure to increase an aspect ratio (a ratio of the lengthwise diameter to the thickness) are especially preferable.

Cations are usually held in a space between the layers of the laminar compounds. Alkali metal ions, for example, K⁺, Na⁺ and Li⁺ can be mentioned as such interlaminar ions. In particular, cations are preferably substituted by Na for enhancing swelling property.

No particular limitation exists in diameter of average granule or particles of the inorganic laminar compound (C). However, the compound having a diameter of at least 300 Å and 5 µm or less in lengthwise direction are preferably used. If the particle size is greater than 5 µm, the resultant film will be damaged in transparency and will be deteriorated in barrier performance under high humidity when cleavage of the particles is insufficient. As the aspect ratio becomes higher, transparency and barrier property of the resultant biaxially stretched film will become better but will result in deterioration in adhesion to the biaxially stretched biodegradable polyester film so that an aspect ratio of 20-2000 is preferably used.

### Gas barrier polymer (D):

The gas barrier polymer (D) in the present invention means a polymer excellent in gas barrier property, and includes various known polymers, for example, polyester, polyamide, polyvinyl alcohol, ethylene-vinyl alcohol copolymer, etc. Among these polymers, water-soluble or water-dispersible polymers are preferable as they afford a composition excellent in dispersibility in the inorganic laminar compounds.

Such water-soluble or water-dispersible polymer is high molecular and entirely soluble or slightly dispersible in water at normal temperature. Illustrative of the gas barrier polymer are, for example, a polymer of polyvinyl alcohol series and a derivative thereof; a cellulose derivative such as carboxymethylcellulose and hydroxycellulose; a starch derivative such as starch oxide, an etherified starch, and dextrin; copolymeric polyesters having polar groups such as those from polyvinylpyrrolidone and sulfoisophthalic acid; a vinylic polymer such as polyhydroxyethyl methacrylate or a copolymer thereof; high molecular substances of acrylic series; high molecular substances of urethane series; high molecular substances of ether series; and these polymers wherein the carboxyl groups, amino groups and methylol groups are functionally modified. Among these polymers, those of polyvinyl alcohol series and a derivative thereof are preferable since they are biodegradable. Above all, polyvinyl alcohol having a saponification value of at least 80 mol%, preferably at least 99 mol%, more preferably 99.5 mol% or a polyvinyl alcohol copolymer having a vinyl alcohol unit of at least 70 mol% is desirable. The copolymer having a vinyl alcohol unit less than 70 mol% is inferior in gas barrier property and tends to become insufficient in performance as a barrier material.

No particular limitation exists in the polymerization degree of the polymer of polyvinyl alcohol series or a copolymer thereof, but the polymer or copolymer having a polymerization degree within the range of 100-5,000 is preferable, the range of 200-2,500 is more preferable and the range of 500-2,000 is more preferable. If the polymerization degree is lower than 100, the gas barrier property will become insufficient. On the other hand, if the polymerization degree is more than 5,000, the viscosity of a coating liquid for forming a coating film may become too high to form a uniform coating film.

The use of the polymer of vinyl alcohol series having a residual sodium acetate amount of not more than 0.5% by weight, preferably not more than 0.2% by weight, and more preferably not more than 0.1% by weight enables to afford a film which scarcely deteriorate gas barrier property even under high humidity and is more excellent in gas barrier property. The sodium acetate in the polymer of polyvinyl alcohol series is produced in the course of saponification for preparing the polymer of polyvinyl alcohol series from polyvinyl acetate. The amount of sodium acetate can be removed within the aforesaid range according to various known methods including washing with water, separation by way of an ion-exchange membrane or the like means.

### Layer of a Composition of the inorganic laminar Compound (C) and the gas barrier Polymer (D):

A layer of a composition of the inorganic laminar compound (C) and the gas barrier polymer (D) in the present invention comprises an inorganic laminar compound (C) and a gas barrier polymer (B) in a weight ratio of (C)/(D) preferably within the range of 1/99 - 70/30, especially 20/80 - 50/50. If the ratio is smaller than 1/99, the composition may fail to obtain sufficient barrier property. On the other hand, if the ratio is greater than 70/30, the adhesiveness to the biaxially stretched biodegradable polyester film may be deteriorated.

In the present invention, the gas barrier polymer (D) may be incorporated with a crosslinking agent for the purpose of promoting adhesiveness to the biaxially the film. Known as the crosslinking agent are a silane, coupling agent, an isocyanate crosslinking agent, epoxy crosslinking agent, a crosslinking agent of melamine series, an amine compound, etc., but the isocyanate crosslinking agent is preferable since this agent does not permit deterioration of adhesiveness even under high humidity. In particular, an aqueous self-emulsified type is preferable because of its stability in aqueous solutions. The crosslinking agent to be added is preferably in an amount of 1-10% in terms of weight ratio to the gas barrier polymer (D).

It is possible to incorporate the gas barrier polymer (D) with a wetting-promoting agent, an antistatic agent and other various additives so far as the object of the invention will not be damaged. In particular, silicon oxide, kaolin and the like inorganic fine particles and poly(methyl methacrylate), melamine, and like organic fine particles are preferably used as an anti-blocking agent.

### Biaxially stretched biodegradable polyester film:

The biaxially stretched biodegradable polyester film of the present invention can be produced according to a known molding method for manufacturing the known biaxially stretched film. For example, a process wherein the biodegradable polyester (A) and the tackifier (B) are mixed together in a given proportion and the mixture was directly charged into a film molding machine to form a biaxially stretched film, and a process wherein the biodegradable polyester (A) and the tackifier (B) are mixed together in a given proportion, the mixture is subjected to melt-kneading by an extruder or the like to prepare a polyester composition and thereafter the composition is charged into a film molding machine to form a biaxially stretched film can be exemplified as a molding method. The thickness of the biaxially stretched biodegradable polyester film is determined according to the intended use, but is usually within the range of 10-80 µm, preferably 15-50 µm. The biaxially stretched biodegradable polyester film of the present invention may be laminated on the surface layers on both sides with the biodegradable polyester (A) to which an anti-blocking agent has been added, without using the tackifier (B), for improving blocking due to the tackifier (B). In this case, the laminated layer has a thickness within the range of 0.5-10 µm, preferably 2-5 µm.

In order to obtain the biaxially stretched film, for example, a case film of the aforesaid polyester film is initially molded and the film is then subjected to a stretching orientation treatment. This cast film is obtained by supplying the polyester composition to a monoaxial or biaxial extruder, melting the composition at a temperature above the melting point thereof, extruding the molten composition through a T-die or the like in the form of a sheet or film, and finally quickly cooling the extruded material followed by taking it up to a roll.

The cast film once molded can successively be stretched in monoaxial or biaxial direction for orienting the film molecules. The stretching operation is carried out within a temperature from the glass transition point of the polyester composition to the crystallizing temperature of the composition according to the monoaxial stretching method, the successive biaxially stretching method wherein a stretching roll and the Tenter type lateral stretching machine are employed, or the concurrent biaxially stretching method.

The stretching condition varies according to the composition of the resin and the thermal history of the stretchable sheet, but is conducted at a lengthwise stretching temperature of 50-70°C and at a lengthwise stretching ratio of 1.5-6.0 followed by lateral stretching at a temperature of 70-120°C and at a ratio of 1.5-6.0 when polylactic acid is selected as the polyester composition. After the stretching operation, the film is preferably subjected to a repeated thermal treatment to apply heat setting to the film. The temperature for the heat setting treatment in this case is within the range from the crystallization temperature of polylactic acid to the melting point thereof, i.e. 110~160°C.

In case the aromatic polyester is selected as the polyester composition, for example, the stretching treatment is conducted at a lengthwise stretching temperature of 40-60°C and a lengthwise stretching ratio of 1.5-6.0 followed by lateral stretching at a temperature of 60-130°C and a ratio of 1.5-6.0. After the stretching treatment, the film is preferably subjected to a repeated thermal treatment to apply heat setting to the film. The temperature for the heat setting treatment is within the range from the crystallizing temperature of the aromatic polyester to the melting point thereof, i.e. 20-180°C.

The film thus produced has been oriented in biaxial direction to have a high degree of mechanical strength and a good improvement in brittleness as shown by non-stretched films and is preferable for use in a packaging material. In case the film is subjected to the heat setting treatment, the molecular structure can be stabilized to increase crystallinity thereby further enhancing the mechanical strength of the film. If the thickness of the film is within the range of 5-300 µm, preferably 10-200 µm, it will be desirable to acquire a moderate balance of mechanical strength, transparency and biodegradability necessary for the film.

### Multi-layer Film of the biaxially stretched biodegradable polyester:

The multi-layer film of the biaxially stretched biodegradable polyester of the present invention is a laminate film wherein a composition comprising the inorganic laminar compound (C) and the gas barrier polymer (D) is laminated on at least one surface of the biaxially stretched biodegradable polyester film. Such multi-layer film of the biaxially stretched biodegradable polyester is preferably prepared by dispersing a composition comprising the inorganic laminar compound (C) and the gas barrier polymer (D) in a dispersant and coating the composition in the dispersed state onto the biaxially stretched biodegradable polymer film. Any of the known conventional methods such as gravure-coating method, a reverse-coating method, a roll-coating method, a bar-coating method, a spray-coating method, air-knife coating method, etc. can be adopted and a proper combination of these methods can also be carried out.

In case the composition comprising the inorganic laminar compound (C) and the gas barrier polymer (D) is coated onto the biaxially stretched biodegradable polyester film, the inorganic laminar compound (C) is allowed to swell sufficiently prior to the coating and a compulsory mechanical dispersion treatment by the aid of a homomixer, a high pressure homogenizer, a ball mill, a beads mill or the like apparatus is preferably carried out for re-dispersion of the secondary coagulated particles. The inorganic laminar compound (C) alone may be dispersed and then mixed with a solution of the water-soluble or water-dispersible polymer (D), or alternatively a mechanical dispersion treatment may be carried out after mixing.

A preferable concentration of the solid matter in the dispersion of the inorganic laminar compound (C) and the gas barrier polymer (D) is usually 1.0-30% by weight, and more preferably 2.0-10% by weight. If the concentration of the solid matter in the dispersion is less than 1.0% by weight, a thicker coating will be necessary for achieving a definite film thickness, thus tending to incur deterioration of productivity and wetting property. On the other hand, if the concentration exceeds 30% by weight, the viscosity of the dispersion will become extremely high to cause uneven coating. In the aspect of cost and working environment, water is preferably used as dispersion medium. However, a solvent other than water, for example, an alcohol such as methanol, ethanol or isopropanol, a ketone such as acetone, or methyl ethyl ketone, or other diethyl ether, tetrahydrofuran or the like solvent may be added, if necessary, in a combination of one or two. The multi-layers of the biaxially stretched biodegradable polyester is obtained by coating a dispersion of a composition comprising the inorganic laminar compound (C) and the gas barrier polymer (D) onto the surface of the biaxially stretched biodegradable polyester film to which an anchoring treatment has been applied, if necessary, and then drying the dispersion. The thickness of the composition layer comprising the inorganic laminar compound (C) and the gas barrier polymer (D) is usually within the range of 0.5-2 µm.

### [Effect of the Invention]

The biaxially stretched biodegradable polyester film possesses, as a matter of course, biodegradability and furnished with transparency and a high degree of mechanical strength necessary for packaging materials. Moreover, the film excellent in gas barrier property can also be used as a food-packaging material for use in dried foods, for which a polyolefin film alone has hitherto been able to use. Thus, a disposal or recovery treatment for garbage and compost packages including contents thereof now become easy, thus serving to spread the intended uses of biodegradable plastic film articles. As other utilization forms of the film or laminate of the present invention, a laminate film together with paper for packaging food and confectionery, a container for garbage and compost to be wasted, and a tray or other shapes of containers laminated with paper, pulp mold, etc. or kneaded with starch resin can be mentioned.

### [Examples]

The present invention will now be illustrated more in detail by way of Examples and Comparative Examples, but it is to be construed that the invention is not limited thereto.

The starting materials used in Examples and Comparative Examples are as follows:
(1) Polylactic acid (A-1):
   Produced by Mitsui Chemicals Inc., Japan: Trade name: LACEA H-100, specific gravity: 1.26, Vicat softening point: 58°C, MFR (190°C, load: 2160 g) 13 g/10 min.
(2) Aromatic polyester (A-2):
   Monomer composition of copolymer: terephthalic acid: 45 mol%, ethylene glycol 37 mol%, diethylene glycol 9 mol%, sodium 5-sulfo-isophthalate 1 mol%, hydroxyacetic acid 8 mol%; Density: 1.35 (g/cm³), Melting point: 200°C; MFR (220°C, 2160g load): .15 (g/10 min.)
(3) Tackifier:
   Alicyclic hydrocarbon resin (B-1):
      Produced by Arakawa Chemical Industries, Ltd., Japan: Trade name: ARKON P-90, Vicat softening point: 87.0°C
   Alicyclic hydrocarbon resin (B-2):
      Produced by Arakawa Chemical Industries, Ltd., Japan: Trade name: ARKON P-100, Vicat softening point: 99.0°C
   Alicyclic hydrocarbon resin (B-3):
      Produced by Arakawa Chemical Industries, Ltd., Japan: Trade name: ARKON P-115, Vicat softening point: 115°C
   Speciality rosin ester (B-4):
      Produced by Arakawa Chemical Industries, Ltd., Japan: Trade name: SUPER ESTER A-100; Vicat softening point: 102.5°C; Acid number: 4.2
      Softening point: measured according to JIS K2531
      Acid number: measured according to JIS K0070
(4) A coating liquid comprising the inorganic laminar compound (C) and the gas barrier polymer (D):
   Polyvinyl alcohol having a polymerization degree of 1700, a saponification value of at least 99.9%, and a residual sodium acetate content of 0.1% or less was incorporated with 10% by weight of sodium hectorite having an average particle diameter (according to the precipitation method) of 1.8 µm and an average particle diameter (according to the Laser method) of 3.7 µm, and water was added to make a 10% by weight solution which was stirred for one minute at 10000 rpm.

The precipitation method: A result of measurement of median diameter according to Ultra-centrifugal automatic grain distribution measuring apparatus (HORIBA, Ltd., Japan).

The Laser method: A result of measurement of median diameter according to Laser Diffraction Scattering type grain distribution measuring apparatus (Seishin Enterprise, Co. Ltd., Japan).

### Example 1

<Preparation of a composition> A-1 and B-1 were weighed in a mixing ratio of 95:5 (weight%) and the mixture was melt-kneaded at 180°C by the aid of a biaxial extruder of 30 mmØ to obtain a Composition-1.

<Production of a non-stretched sheet> Using a monoaxial extruder of 40 mmØ equipped with a T-die at the head thereof, the Composition-1 was extruded at a molding temperature of 180°C to obtain a non-stretched film of 250 µm.

<Production of a biaxially stretched film> Using a pantagraph-type batch biaxially stretching apparatus (Toyo Seiki Seisaku-syo, Japan; heavy type), the non-stretched film was preheated at 80°C for 10 seconds in hot air, and stretched at a velocity of 5 m/min. in lengthwise direction in a ratio of 3.3 and in lateral direction in a ratio of 3:3 (the stepwise biaxially stretching). After the stretching treatment, the film was allowed to stand in the atmosphere at 80°C for 1 minute to effect heat setting and then quickly cooled with a cooling fan thereby obtaining a biaxially stretched film of 25 µm in thickness. Appearance of the resultant biaxially stretched film was visually observed and the moisture permeability (40°C x 90% RH) of the film was measured according to JIS Z0208. A result of the measurement is shown in Table 1.

### Example 2

An experiment was carried out in the same manner as in Example 1 except that A-1 and B-2 were melt-kneaded in a ratio of 95:5 (weight %) in place of the Composition-1 used in Example 1. A result of the measurement is shown in Table 1.

### Example 3

An experiment was carried out in the same manner as in Example 1 except that A-1 and B-2 were melt-kneaded in a ratio of 90:10 (weight %) in place of the Composition-1 used in Example 1. A result of the measurement is shown in Table 1.

### Comparative Example 1

An experiment was carried out in the same manner as in Example 1 except that A-1 and B-3 were melt-kneaded in a ratio of 95:5 (weight %) in place of the Composition-1 used in Example 1. A result of the measurement is shown in Table 1.

### Comparative Example 2

An experiment was carried out in the same manner as in Example 1 except that A-1 and B-3 were melt-kneaded in a ratio of 90:10 (weight %) in place of the Composition-1 used in Example 1. A result of the measurement is shown in Table 1.

### Example 4

An experiment was carried out in the same manner as in Example 1 except that A-1 and B-4 were melt-kneaded in a ratio of 95:5 (weight %) in place of the Composition-1 used in Example 1. A result of the measurement is shown in Table 1.

### Example 5

An experiment was carried out in the same manner as in Example 1 except that A-1 and B-4 were melt-kneaded in a ratio of 90:10 (weight %) in place of the Composition-1 used in Example 1. A result of the measurement is shown in Table 1.

### Example 6

A coating liquid containing a composition comprising the inorganic laminar compound (C) and the gas barrier polymer (D) was coated in an amount of 1 g/m³ in terms of the weight of a solid matter onto the surface of the biaxially stretched film obtained in Example 5 by the aid of a MAYERBAR, and the coating was dried at 70°C for 20 seconds by way of a drier. The coated film was then allowed to stand in an oven maintained at 40°C for 24 hours and the moisture permeability of the film was measured in such manner that the coated surface was turned to a drying side (inside). A result of the measurement is shown in Table 1.

### Comparative Example 3

An experiment was carried out in the same manner as in Example 1 except that A-1 alone was used in place of the Composition-1 used in Example 1. A result of the measurement is shown in Table 1.

In Table 1 given hereunder, the amount (2) or 4) is shown in terms of % by weight while the moisture permeability is designated in terms of g/m²·24 h) (25 µ).

**TABLE 1**

| Items | Ex. 1 | Ex. 2 | Ex. 3 | Com. Ex. 1 | Com. Ex. 2 | Ex. 4 | Ex. 5 | Ex. 6 | Com. Ex. 3 |
|---|---|---|---|---|---|---|---|---|---|
| (1) Biodegradable Polyester | A-1 | A-1 | A-1 | A-1 | A-1 | A-1 | A-1 | A-1 | A-1 |
| (2) Amount Incorporated | 95 | 95 | 90 | 95 | 90 | 95 | 90 | 90 | 100 |
| (3) Tackifier | B-1 | B-2 | B-2 | B-3 | B-3 | B-4 | B-4 | B-4 | - |
| (4) Amount Incorporated | 5 | 5 | 10 | 5 | 10 | 5 | 10 | 10 | - |
| (5) Coating Liquid applied | None | None | None | None | None | None | None | Yes | None |
| (6) Moisture Permeability | 168 | 161 | 70. | 324 | 168 | 266 | 186. | 42 | 351 |
| (7) Appearance of Film | Good | Good | Good | Clazed | Clazed | Good | Good | Good | Cood |

### Example 7

<Preparation of a composition>. A-2 and B-1 were weighed in a mixing ratio of 95:5 (weight %) and the mixture was melt-kneaded at 220°C by the aid if a biaxial extruder of 30 mmØ to obtain a Composition-2.
<Production of a press sheet> Using a press machine (Mini-testpress M-2FH; Toyo Seiki Seisaku-syo, Japan), a sheet of 10 cm x 10 cm having a thickness of 250 µm was molded from the Composition-2. In this case, polytetrafluoroethylene (trade name: Teflon) sheets of 200 µm in thickness were used on both upper and lower sides for preventing adhesion to heating steel plates by thermal fusion.
<Production of a stretched film> Using a pantagraph-type batch biaxially stretching apparatus. (Toyo Seiki Seisaku-syo, Japan; heavy type), the Compositin-2 was preheated at 80°C for 10 seconds in hot air, and stretched at a velocity of 5 m/min. in lengthwise direction in a ratio of 3.3 and in lateral direction in a ratio of 3.3 (the stepwise biaxially stretching). After the stretching treatment, the film was allowed to stand in the atmosphere at 75°C for 1 minute to effect heat setting and then quickly cooled with a cooling fan thereby obtaining a biaxially stretched film of 25 µm in thickness. Appearance of the resultant biaxially stretched film was visually observed and the moisture permeability (40°C x90% RH) of the film was measured according to JIS Z0208. A result of the measurement is shown in Table 2.

### Example 8

An experiment was carried out in the same manner as in Example 7 except that A-2 and B-2 were melt-kneaded in a mixing ratio of 95:5 (weight %) in place of the Composition-2 used in Example 7. A result of the measurement is shown in. Table 2.

### Example 9

An experiment was carried out in the same manner as in Example 7 except that A-2 and B-2 were melt-kneaded in a mixing ratio of 90:10 (weight %) in place of the Composition-2 used in Example 7. A result of the measurement is shown in Table 2.

### Comparative Example 4

An experiment was carried out in the same manner as in Example 7 except that A-2 and B-3 were melt-kneaded in a mixing ratio of 95:5 (weight %) in place of the Composition-2 used in Example 7. A result of the measurement is shown in Table 2.

### Comparative Example 5

An experiment was carried out in the same manner as in Example 7 except that A-2 and B-3 were melt-kneaded in a mixing ratio of 90:10 (weight %) in place of the Composition-2 used in Example 7. A result of the measurement is shown in Table 2.

### Example 10

An experiment was carried out in the same manner as in Example 7 except that A-2 and B-4 were melt-kneaded in a ratio of 97.5:2.5 (weight %) in place of the Composition-2 used in Example 7. A result of the measurement is shown in Table 2.

### Example 11

An experiment was carried out in the same manner as in Example 7 except that A-2 and B-4 were melt-kneaded in a mixing ratio of 95:5 (weight %) in place of the Composition-2 used in Example 7. A result of the measurement is shown in Table 2.

### Example 12

An experiment was carried out in the same manner as in Example 7 except that A-2 and B-4 were melt-kneaded in a mixing ratio of 90:10 (weight %) in place of the Composition-2 used in Example 7. A result of the measurement is shown in Table 2.

### Example 13

A coating liquid containing a composition comprising the inorganic laminar compound (C) and the gas barrier polymer (D) was coated in an amount of 1 g/m³ in terms of the weight of a solid matter onto the surface of the film obtained in Example 12 by the aid of a MAYERBAR, and the coating was dried at 70°C for 20 seconds by way of a drier. The coated film was then allowed to stand in an oven maintained at 40°C for 24 hours and the moisture permeability of the film was measured in such manner that the coated surface was turned to a drying side (inside). A result of the measurement is shown in Table 2.

### Comparative Example 6

An experiment was carried out in the same manner as in Example 7 except that A-2 alone was used in place of the Composition-2 used in Example 7, A result of the measurement is shown in Table 2.

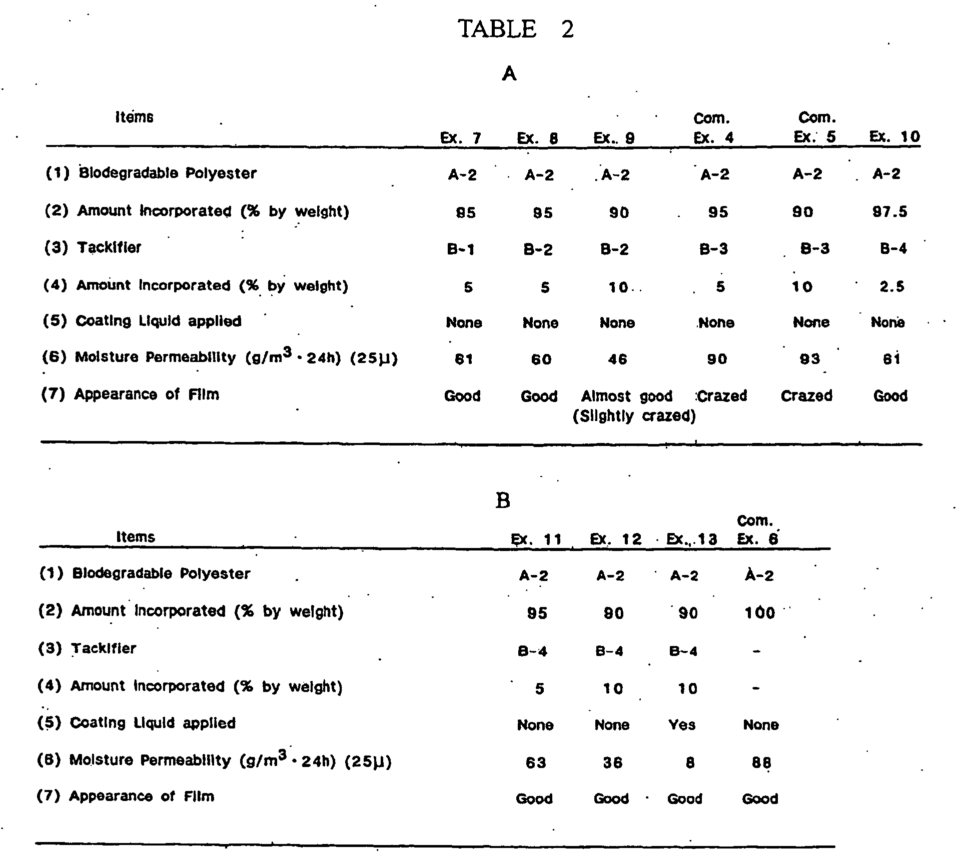

As is evident from the results shown in Tables 1 and 2, it is understood that the biaxially stretched films obtained from compositions comprising polylactic acid (A-1) and various tackifiers (Examples 1-3, Comparative Examples 1-2, and Examples 4 and 5) are enhanced in moisture-preventing property (reduction in moisture permeability) as compared with a biaxially stretched film obtained from polylactic acid alone (Comparative Example 3). The most significant improving effect in moisture-preventing property is seen in Example 3 wherein a biaxially stretched film is obtained from polylactic acid having been incorporated with the alicyclic hydrocarbon resin (B-2) having a Vicat softening point of 99.0°C. On the other hand, the biaxially stretched film obtained from polylactic acid incorporated with the tackifier (B-3) having a Vicat softening point of 115°C (Comparative Examples 1 and 2) shows inferior appearance due to crazing. It is also understood that a biaxially stretched laminated film (Example 6) obtained by coating a composition comprising the inorganic laminar compound (C) and the gas barrier polymer (D) onto the base film is more enhanced in moisture-preventing property.

The biaxially stretched films obtained from the aromatic polyester (A-2) incorporated with the tackifier (Examples 7-9, Comparative Examples 4 and 5, and Examples 10-12) are enhanced in moisture-preventing property (reduction in moisture permeability) as compared with the biaxially stretched film obtained from the aromatic polyester (A-2) alone (Comparative Example 6). In addition, the aforesaid biaxially stretched films are also excellent in moisture-preventing property as compared with those obtained from polylactic acid (A-1) incorporated with the tackifier. The most significant improving effect in moisture-preventing property is seen in Example 9 wherein the biaxially stretched film is obtained from a composition incorporated with 10% by weight of the alicyclic hydrocarbon resin (B-2) having a Vicat softening point of 99.0°C. However, this film is inferior in appearance and a slight crazing is observed. On the other hand, the biaxially stretched film obtained from a composition incorporated with the tackifier (B-3) having a Vicat softening point of 115°C (Comparative Examples 4 and 5) shows inferior appearance due to the generation of crazing. It is also understood that the biaxially stretched laminated film (Example 13) obtained by coating a composition comprising the inorganic laminar compound (C) and the gas barrier polymer (D) onto the base film is more enhanced in moisture-preventing property.

It is understood that the preceding representative examples may be varied within the scope of the present specification both as to components and treating conditions, by those skilled in the art to achieve essentially the same results.

As many widely different embodiment s of the present invention may be made without departing from the sprit and scope thereof, it is to be construed that the present invention is not limited to the specific embodiments thereof except as defined in the appended claims.

## Claims

1. A biaxially stretched biodegradable polyester film obtainable from a polyester composition containing 80-99% by weight of a biodegradable polyester (A) and 1-20% by weight of a tackifier (B) having a softening point within the range of 85-110°C which is a coumarone-indene resin, a phenol resin, a xylene-formaldehyde resin, a terpene resin, a petroleum hydrocarbon resin, a hydrogenated hydrocarbon resin or a rosin derivative.

2. A biaxially stretched biodegradable polyester film according to Claim 1, wherein the biodegradable polyester (A) is polylactic acid.

3. A biaxially stretched biodegradable polyester film according to Claim 1, wherein the biodegradable polyester (A) is an aromatic polyester.

4. A biaxially stretched biodegradable polyester film according to Claims 3, wherein the aromatic polyester is an aromatic polyester containing an aromatic dicarboxylic acid having a sulfonic metal base as nuclear substituent.

5. A biaxially stretched biodegradable polyester film according to Claim 1, wherein the tackifier (B) is:
(i) a phenol resin selected from a p-tert-butylphenol-acetylene resin, a phenol-formaldehyde resin or a terpene-phenol resin;
(ii) a terpene resin selected from a β-pinene resin, an α-pinene resin, a dipentene base resin, a styrene-modified terpene resin, a synthetic polyterpene resin or a terpene resin having no polar groups;
(iii) a petroleum hydrocarbon resin selected from an aromatic hydrocarbon resin, an aliphatic hydrocarbon resin, an alicyclic hydrocarbon resin, an aliphatic-alicyclic petroleum resin or an aliphatic-aromatic petroleum resin; or
(iv) a rosin derivative selected from a pentaerythritol ester of rosin, a glycerol ester of rosin, a hydrogenated rosin, a pentaerythritol ester of a hydrogenated rosin, a methyl ester of a hydrogenated rosin, a triethyleneglycol ester of a hydrogenated rosin, a metal salt of a rosin ester or a speciality rosin ester having an acid number of 10 or less.

6. A biaxially stretched biodegradable polyester multi-layer film comprised of a layer of a composition comprising an inorganic laminar compound (C) and a gas barrier polymer (D) laminated on at least one side of the biaxially stretched biodegradable polyester film according to any of Claims 1-5.

7. A biaxially stretched biodegradable polyester multi-layer film according to Claim 6, wherein the gas barrier polymer (D) is a water-soluble or water-dispersible polymer.

8. A biaxially stretched biodegradable polyester multi-layer film according to Claim 6, wherein the gas barrier polymer (D) is a polymer of polyvinyl alcohol.

## Patentansprüche

1. Biaxial gestreckte bioabbaubare Polyesterfolie, erhältlich aus einer Polyesterzusammensetzung, die 80 bis 99 Gew.% eines bioabbaubaren Polyesters (A) und 1 bis 20 Gew.% eines Klebrigmachers (B) mit einem Erweichungspunkt innerhalb eines Bereichs von 85 bis 110°C und der ein Cumaron-Inden-Harz, ein Phenolharz, ein Xylen-Formaldehyd-Harz, ein Terpenharz, ein Petroleumkohlenwasserstoffharz, ein hydriertes Kohlenwasserstoffharz oder ein Naturharzderivat ist, enthält.

2. Biaxial gestreckte bioabbaubare Polyesterfolie gemäss Anspruch 1, worin der bioabbaubare Polyester (A) Polymilchsäure ist.

3. Biaxial gestreckte bioabbaubare Polyesterfolie gemäss Anspruch 1, worin der bioabbaubare Polyester (A) ein aromatischer Polyester ist.

4. Biaxial gestreckte bioabbaubare Polyesterfolie gemäss Anspruch 3, worin der aromatische Polyester ein aromatischer Polyester, der eine aromatische Dicarbonsäure mit einem Metallsulfonsäurerest als Substituent am Kern enthält, ist.

5. Biaxial gestreckte bioabbaubare Polyesterfolie gemäss Anspruch 1, worin der Klebrigmacher (B) ist:
(i) ein Phenolharz, ausgewählt aus einem p-tert-Butylphenol-Acetylen-Harz, einem Phenol-Formaldehyd-Harz oder einem Terpen-Phenol-Harz;
(ii) ein Terpenharz, ausgewählt aus einem β-Pinenharz, einem α-Pinenharz, einem Harz auf Dipentenbasis, einem Styrol-modifizierten Terpenharz, einem synthetischen Polyterpenharz oder einem Terpenharz ohne polare Gruppen;
(iii) ein Petroleumkohlenwasserstoffharz, ausgewählt aus einem aromatischen Kohlenwasserstoffharz, einem aliphatischen Kohlenwasserstoffharz, einem alicyclischen Kohlenwasserstoffharz, einem aliphatischalicyclischen Petroleumharz oder einem aliphatischaromatischen Petroleumharz; oder
(iv) ein Naturharzderivat, ausgewählt aus einem Pentaerythritolester eines Naturharzes, einem Glycerinester eines Naturharzes, einem hydrierten Naturharz, einem Pentaerythritolester eines hydrierten Naturharzes, einem Methylester eines hydrierten Naturharzes, einem Triethylenglykolester eines hydrierten Naturharzes, einem Metallsalz eines Naturharzesters oder einem besonderen Naturharzester mit einer Säurezahl von 10 oder weniger.

6. Biaxial gestreckte bioabbaubare Polyester-Mehrschichtfolie, umfassend eine Schicht einer Mischung, die eine anorganische laminare Verbindung (C) und ein gasundurchlässiges Polymer (D), laminiert auf zumindest einer Seite der biaxial gestreckten bioabbaubaren Polyesterfolie gemäss einem der Ansprüche 1 bis 5, umfasst.

7. Biaxial gestreckte bioabbaubare Polyester-Mehrschichtfolie gemäss Anspruch 6, worin das gasundurchlässige Polymer (D) ein wasserlösliches oder ein wasserdispergierbares Polymer ist.

8. Biaxial gestreckte bioabbaubare Polyester-Mehrschichtfolie gemäss Anspruch 6, worin das gasundurchlässige Polymer (D) ein Polyvinylalkoholpolymer ist.

## Revendications

1. Film de polyester biodégradable étiré biaxialement pouvant être obtenu à partir d'une composition de polyester comprenant 80-99 % en poids d'un polyester biodégradable (A) et 1-20 % en poids d'un agent poisseux (B) ayant un point de ramollissement situé dans la plage de 85-110°C et qui est une résine de coumarone-indène, une résine de phénol, une résine de xylène-formaldéhyde, un résine de terpène, une résine d'hydrocarbure de pétrole, une résine d'hydrocarbure hydrogénée ou un dérivé de colophane.

2. Film de polyester biodégradable étiré biaxialement selon la revendication 1, dans lequel le polyester biodégradable (A) est de l'acide polylactique.

3. Film de polyester biodégradable étiré biaxialement selon la revendication 1, dans lequel le polyester biodégradable (A) est un polyester aromatique.

4. Film de polyester biodégradable étiré biaxialement selon la revendication 3, dans lequel le polyester aromatique est un polyester aromatique contenant un acide dicarboxylique aromatique ayant une base de métal sulfonique en tant que substituant nucléaire.

5. Film de polyester biodégradable étiré biaxialement selon la revendication 1, dans lequel l'agent poisseux (B) est :
(i) une résine de phénol choisie parmi une résine p-tert-butylphénol-acétylène, une résine phénol-formaldéhyde ou une résine terpène-phénol ;
(ii) une résine de terpène choisie parmi une résine β-pinène, une résine α-pinène, une résine à base de dipentène, une résine de terpène modifié par styrène, une résine de polyterpène synthétique ou une résine de terpène n'ayant pas de groupes polaires ;
(iii) une résine d'hydrocarbure de pétrole choisie parmi une résine d'hydrocarbure aromatique, une résine d'hydrocarbure aliphatique, une résine d'hydrocarbure alicyclique, une résine de pétrole aliphatique-alicyclique ou une résine de pétrole aliphatique-aromatique ; ou
(iv) un dérivé de colophane choisi parmi un ester pentaérythritol de colophane, un glycérol ester de colophane, un colophane hydrogéné, un ester pentaérythritol de colophane hydrogéné, un méthyl ester d'un colophane hydrogéné, un triéthylène glycol ester d'un colophane hydrogéné, un sel métallique d'un ester de colophane ou un ester de colophane de spécialité ayant un nombre acide de 10 ou inférieur.

6. Film multicouche de polyester biodégradable étiré biaxialement, comprenant une couche d'une composition comprenant un composé laminaire minéral (C) et un polymère de barrière gazeuse (D) feuilletée sur au moins un côté du film de polyester biodégradable étiré biaxialement selon l'une quelconque des revendications 1-5.

7. Film multicouche de polyester biodégradable étiré biaxialement selon la revendication 6, dans lequel le polymère de barrière gazeuse (D) est un polymère hydrosoluble ou un polymère dispersible dans l'eau.

8. Film multicouche de polyester biodégradable étiré biaxialement selon la revendication 6, dans lequel le polymère de barrière gazeuse (D) est un polymère d'alcool de polyvinyle.
